# EUROPÄISCHE PATENTSCHRIFT

(11) **EP 2 367 762 B1**
(45) Veröffentlichungstag und Bekanntmachung des Hinweises auf die Patenterteilung: **10.06.2020**
(21) Anmeldenummer: 09793540.7
(22) Anmeldetag: 18.12.2009
(51) Int. Cl.: C01G 23/053, C09C 1/36, H01L 41/09, B82Y 30/00

(54) **NANOPARTIKULÄRE TITANDIOXID-PARTIKEL MIT KRISTALLINEM KERN, EINER SCHALE AUS EINEM METALLOXID UND EINER AUSSENHAUT, DIE ORGANISCHE GRUPPEN TRÄGT, SOWIE VERFAHREN ZU DEREN HERSTELLUNG**
NANOSIZED TITANIUMDIOXIDE PARTICLES WITH A CRYSTALLINE CORE, A METAL OXIDE SHELL AND A FURTHER SHELL BEARING ORGANIC GROUPS AND METHOD FOR PREPARING SAID CORE-SHELL-PARTICLES
PARTICULES NANOMÉTRIQUES D'OXIDE DE TITANIUM COMPORTANT UN NOYAU CRISTALLIN, UNE COUCHE D'UN OXYDE MÉTALLIQUE ET UNE COUCHE D'ENROBAGE COMPRENANT DES GROUPES ORGANIQUES ET METHODE DE PRÉPARATION ASSOCIÉE

(30) Priorität: 23.12.2008 DE 102008062969; 29.05.2009 EP 09161600
(43) Veröffentlichungstag der Anmeldung: 28.09.2011
(73) Patentinhaber: Fraunhofer-Gesellschaft zur Förderung der angewandten Forschung e.V., 80686 München (DE)
(72) Erfinder: HERBIG, Bettina, 97250 Eriabrunn (DE); SCHOTTNER, Gerhard, 91560 Heilsbronn (DE)
(74) Vertreter: Strehl Schübel-Hopf & Partner
(86) Internationale Anmeldenummer: PCT/EP2009/067574
(87) Internationale Veröffentlichungsnummer: WO 2010/072688

(56) Entgegenhaltungen:
- EP-A1- 0 688 834
- DE-A1-102007 040 641
- SEONG YONG BAEK, SEUNG YONG CHAI, KAP SOO HUR, AND WAN IN LEE: "Synthesis of Highly Soluble TiO2 Nanoparticle with Narrow Size Distribution" BULL. KOREAN CHEM. SOC., Bd. 26, Nr. 9, 2005, Seiten 1333-1334, XP002576492

## Beschreibung

Die vorliegende Erfindung betrifft oberflächenmodifizierte Titandioxid-Nanopartikeln und Dispersionen dieser Partikel sowie Verfahren zu deren Herstellung, ausgehend von gelartigen Massen, die in organischen Lösungsmitteln redispergiert werden. Die Partikelgröße im mittleren Bereich (bis maximal 30 nm und insbesondere ab ca. 5 nm) lässt sich mit Hilfe der gewählten Verfahrensparameter gezielt einstellen. Die stabilen Dispersionen oder Gele der erfindungsgemäßen Partikel können aufgrund der gewählten Oberflächenmodifizierung der Nanopartikel hochkonzentriert vorliegen. In einer speziellen Ausführungsform der Erfindung werden oberflächenmodifizierte Titandioxid-Nanopartikel bereitgestellt, die zwischen dem Titandioxid-Kern und der oberflächenmodifizierenden Außenhaut eine Oxidschicht aufweisen, um das Titandioxid gegenüber der Umgebung abzuschirmen. Dadurch kann bei Einarbeitung entsprechender Dispersionen oder nanoskaliger Pulver in organische Matrices deren Schädigung vermieden oder verringert werden.

Derzeit stehen saubere Oberflächen, die "selbstreinigende" Eigenschaften aufweisen, im Fokus intensiver Forschungsarbeiten der Oberflächentechnik. Photokatalytisch aktive Schichten gewinnen dabei immer mehr an Bedeutung. Titandioxid ist ein Photohalbleiter, in dem durch die Absorption von Photonen im UV-A-Wellenlängenbereich des Lichts die Bildung stark oxidierend wirkender Ladungsträger initiiert wird. Aufgrund seiner Stabilität und hohen Aktivität ist es der am häufigsten eingesetzte Photokatalysator. Nanoskaliges Titandioxid ist insbesondere wegen der hohen zur Verfügung stehenden, katalytischen Oberfläche vorteilhaft.

Die Kristallinität der Nanopartikel beeinflusst sowohl die photokatalytische Aktivität als auch die Brechzahl positiv. Im Bereich von Anwendungen, die auf dem photokatalytischen Effekt von Titandioxid-Nanopartikeln beruhen, sollte sie daher möglichst hoch sein. Weiterhin kann die selbstreinigende Wirkung der mit Titandioxid funktionalisierten Oberflächen durch die Größe der Nanopartikel eingestellt werden. Für eine Reihe von Anwendungen in der Oberflächentechnik ist die Transparenz der Beschichtung eine zwingende Voraussetzung, beispielsweise für optische Gegenstände wie Linsen, Brillen oder andere Produkte, die eine hohe Brechzahl aufweisen müssen. Linsen mit einer Beschichtung, die TiO₂-Partikel enthalten kann, sind beispielsweise aus US 2006/0251884 A1 bekannt. Funktionalisierte Schichten basierend auf Nanopartikeln setzen deren nanoskaliges Vorliegen (d < 30nm) nach der Einarbeitung in die Schichtmatrix voraus. Zur Herstellung transparenter Schichten, insbesondere im Bereich von Anwendungen, die auf dem photokatalytischen Effekt von Titandioxid-Nanopartikeln beruhen, sollte der Teilchendurchmesser (bezogen auf den Mittelwert der Gauß-Kurvenverteilung) in der Regel unter 30 m liegen, und die Partikel sollten in nicht agglomerierter Form vorliegen. Die größenabhängige Eigenschaft der Nanopartikel und aus diesen resultierender nanopartikulärer Schichten mit hoher Porosität ist beispielsweise auch für die photovoltaische und sensorische Anwendung wichtig.

Für die vorgenannten Anwendungen, insbesondere auf dem Gebiet der Photokatalyse und der hochbrechenden Lacke und Komposite, sind die Anatas- und die Rutil-Modifikation des Titandioxids von Bedeutung. Die Rutil-Modifikation besitzt bei idealer Kristallinität eine geringere photokatalytische Aktivität und eine höhere Brechzahl (n ≈ 2,7) als Anatas (n ≈ 2,55). Die Synthese von agglomeratfreien Rutil-Nanopartikeln konnte aber bis heute nicht zufriedenstellend gelöst werden (Aufmahlung flammenpyrolytisch erzeugter Pulver bzw. nasschemische Herstellung in sehr verdünnter, stark saurer Lösung).

Wie voranstehend erwähnt, ist häufig eine nanoskalige Redispergierbarkeit der Nanopartikel erforderlich, z.B. zum Zwecke der Einarbeitung in anorganische und organische Schichtmatrices. Für die Redispergierung der Titandioxid-Nanopartikel in organischen Lösungsmitteln und die Einarbeitung dieser in lösungsmittelbasierte Formulierungen (z.B. Lacke, Harze, Polymere) ist die Zugänglichkeit von lösungsmittelbasierten Nanopartikel-Dispersionen mit einem ausreichend hohen Feststoffanteil daher Voraussetzung.

Die Anforderungen einer hohen Kristallinität der Nanopartikel bei gleichzeitig einstellbarer Partikelgröße, deren ausgezeichnete Redispergierbarkeit und das Vorliegen von Dispersionen mit einem hohen Feststoffanteil konnten bisher nicht gleichzeitig realisiert werden.

Die Herstellung kristalliner Titandioxid-Nanopartikel durch sog. Bottom-up-Verfahren (z.B. Fällungsreaktionen, pyrolytische Verfahren etc.) und Top-Down-Verfahren (z.B. Hochenergievermahlung flammenpyrolytisch hergestellter Pulver) werden bereits industriell genutzt.

Flammenpyrolytisch hergestellte Titandioxidpulver sind durch eine hohe Kristallinität gekennzeichnet. Aufgrund der hohen Prozesstemperaturen kommt es jedoch zur Ausbildung von Sinterhälsen zwischen den Partikeln und damit zur Entstehung von Aggregaten im Größenbereich von ∼70 nm, die nur durch aufwändige Vordispergierung unter vermindertem Energieeintrag und anschließender Vermahlung der Vordispersion mittels Hochenergiemühle in eine Dispersion überführt werden können. Die Zugabe oberflächenbelegender Substanzen, z.B. mindestens eines Aminoalkohols und mindestens einer Carbonsäure (DE 102004037118 A1) soll die Reagglomeration der Partikel/Aggregate verhindern. Das Aufbrechen der ∼70 nm großen Aggregate gelingt jedoch selbst mit Hilfe von intensiven Mahlprozessen nicht vollständig. Aus Mahlprozessen resultierende Produkte sind außerdem zumeist aufgrund der Zugabe von Mahlhilfsmitteln (z.B. 10-15 Vol-% ZrO₂-Mahlkugeln) verunreinigt, die nachträglich nur sehr aufwändig entfernt werden können.

Die Herstellung von Nanopartikeln aus kolloiddispersen Lösungen (Fällungsreaktionen basierend auf dem Sol-Gel-Verfahren) über Hydrolyse- und Kondensationsreaktionen von Titanalkoxiden in alkoholischen Lösungen bei leicht erhöhter Temperatur sind bekannt (J. Nanosci. Nanotechnol. Vol. 6, No. 4 (2006) 906; Chem. Rev. 107 (2007) 2891). So wurde die Hydrolyse von Ti(OPrⁱ)₃acac in Alkohol und einem sehr großen Überschuss an Wasser studiert (A. Lèaustic et al., Chem. Mater. 1 (1989) 248). Die dabei gebildeten Teilchen mit Partikelgrößen von 3 bis 6 nm wiesen Eigenschaften auf, die auf die Anwesenheit von Acetylacetonatogruppen auf ihrer Oberfläche schließen ließen. Vergleichbare Titandioxid-Teilchen mit noch kleineren Durchmessern wurden von E. Scolan et al. (Chem. Mater. 10 (1998) 3217) auf ähnlichem Wege erhalten. Die Anwesenheit der Acetylacetonatogruppen verhinderte bei diesen eine weitere Aggregation, so dass ein über mehrere Monate stabiles Sol mit einer Ti-Konzentration von 0,5 - 1 M gewonnen werden konnte.

Einen Weg zur Herstellung von Titandioxid-Nanopartikeln, die nanoskalig dispergierbar sein können und gleichzeitig eine ausreichend hohe Kristallinität aufweisen, stellt die Hydrothermalsynthese dar. Diese ist den konventionellen Fällungsverfahren, basierend auf der Sol-Gel-Technologie, überlegen. Es handelt sich dabei um die Herstellung kristalliner Titandioxid-Nanopartikel durch die thermische Behandlung von wässrigen Lösungen in Autoklaven. Sie ist in einer Vielzahl von wissenschaftlichen Publikationen und Patenten beschrieben.

Im Hinblick auf die eingesetzte Titanausgangsverbindung sind zwei unterschiedliche Synthesewege möglich. In den meisten Fällen werden Titansalze, vorzugsweise Titanhalogenide, oder deren Lösungen, wie beispielsweise TiCl₃, TiCl₄, TiOCl₂, TiOSO₄ eingesetzt. Weiterhin wird die Verwendung von Titanalkoxiden (Ti(OPrⁱ)₄, Ti(OBuⁿ)₄ etc.) beschrieben.

Üblicherweise wird durch die saure oder basische Hydrolyse der genannten Ausgangsverbindungen ein amorphes TiO(OH)ₓ-Präzipitat erzeugt, das gegebenenfalls nach dem Waschen zur Herstellung von halogenfreiem Material als Suspension autoklaviert wird. Die dabei erhaltenen, kristallinen Titandioxid-Nanopartikel liegen wiederum als Präzipitat vor und müssen daher ggf. aufwändig durch Filtration oder Zentrifugation entfernt werden. Die Herstellung nanopartikelhaltiger Sole erfordert die Redispergierung der Präzipitate durch aufwändige Mahlvorgänge und Dispergierprozesse, gegebenenfalls unter Ultraschall, und/oder die Zugabe von Dispergierhilfsmitteln sowie die genaue Einstellung des pH-Wertes. Diese Vorgehensweisen zur Herstellung nanopartikulärer Titandioxid-Dispersionen ist in der Literatur eingehend beschrieben worden.

Sollen die auf hydrothermalem Weg synthetisierten Nanopartikel erst nach ihrer Herstellung aufbereitet werden, so ist die in DE 102004048230A1 und WO2006/037591A2 allgemein vorgeschlagene und anhand von ZrO₂ gezeigte Vorgehensweise von Vorteil. Die Partikel sind nach Angaben der Autoren nach der Thermal- bzw. Hydrothermalbehandlung noch nicht modifiziert. Durch das Aufmahlen der zuvor durch Trocknung erhaltenen Pulver unter Zugabe von oberflächenbelegenden Substanzen, z.B. Silanen, Carbonsäuren, β-Carbonylverbindungen, Aminosäuren und Aminen, kann jedoch eine mechanisch aktivierte Oberflächenmodifizierung maßgeschneidert für die spätere Anwendung erfolgen.

Auch die Herstellung von kristallinen Titandioxid-Nanopartikeln durch die thermische Behandlung von lösungsmittelhaltigen Lösungen (Solvothermalsynthese) war bereits Gegenstand von in wissenschaftlicher Literatur und in Patentanmeldungen beschriebenen Versuchen.

Kim et al. (J. of Crystal Growth 254 (2003) 405) mischten Titanisopropylat mit Toluol in unterschiedlichen Gewichtsanteilen. Aus der Solvothermalbehandlung dieser Lösungen bei 250°C für 3h resultierten Präzipitate von kristallinen Titandioxid-Nanopartikeln in der Anatas-Modifikation mit durchschnittlichen Teilchengrößen von etwa 11 - 20 nm.

M. Kang et al. (J. of Photochemistry and Photobiology A: Chemistry 144 (2001) 185) autoklavierten eine Lösung von Titanisopropylat in 1,4-Butandiol bei 30°C für 1h und erhielten durch diese Vorgehensweise ebenfalls ein Präzipitat kristalliner Titandioxid-Nanopartikel in der Anatas-Modifikation mit Teilchengrößen von mindestens 50nm.

Auch H. Kominami et al. (Catalysis Today 84 (2003) 181) stellten durch Solvothermalbehandlung von Titan-n-butylat in 2-Butanol kristalline Titandioxid-Nanopartikel in der Anatas-Modifikation her. Aus der Solvothermalbehandlung der alkoholischen Lösung resultierte ein Pulver agglomerierter Titandioxid-Nanopartikel mit einem durchschnittlichen Durchmesser von 20nm. Im Gegensatz zu Kim et al., a.a.O., erhielten sie kein Produkt, wenn das Lösungsmittel durch Toluol ersetzt wurde, woraus sie schlossen, dass das für die Hydrolyse erforderliche Wasser aus dem Butanol stammte.

Im Bereich der Sol-Gel-Chemie ist die Stabilisierung von Titanverbindungen durch Zugabe chelatisierender Agentien wie beispielsweise Carbonsäuren oder Diketonen etc. sehr gut untersucht, siehe Inorg. Chem. Commun. 6 (2003) 102; J. Mat. Chem. 14 (2004) 3113; Mater. Res. Soc. Symp. Proc. Vol. 847 (2005) EE7.2.1; J. Chem. Soc. Dalton Trans. (1996) 3343; Chem. Mater. 1 (1989) 240.

X. Chen et al. (J. Am. Ceram. Soc. 87 [6] (2004) 1035) stellten aus Titan-n-butylat unter Zugabe von Acetanhydrid in Cyclohexan durch Erwärmen auf 75 - 80°C eine Titanyl-Carboxyl-Komplexverbindung her, die als festes Produkt durch Zentrifugation isoliert werden konnte. Der Komplex wurde in viel Wasser oder verdünnter Salpetersäure dispergiert, erwärmt und gerührt. Dabei löste er sich in Abhängigkeit von der Salpetersäure-Konzentration mit unterschiedlicher Geschwindigkeit auf. Das Reaktionssystem wurde anschließend bis zur vollständigen Umsetzung druckfrei auf 60°C gehalten, und die entstandenen Kristalle mit Teilchendurchmessern zwischen 3 und 9 nm und Rutil- und/oder Anatasstruktur wurden abzentrifugiert, gewaschen und zu einem Pulver getrocknet. Die Anataskristalle besaßen einen Durchmesser zwischen 4 und 6 nm.

Jitputti et al. (J. Solid State Chem. 180 (2007) 1743) komplexierten Titanbutylat nach Zugabe von Ethanol und Wasser mit Acetylaceton (Ti:Acac = 1:1) (130°C, 12h). Sie erhielten ein Produktgemisch, das nach dem Waschen mit Isopropanol im Ofen getrocknet wurde. Röntgenographische Untersuchungen zeigten, dass es sich bei dem isolierten Pulver um Titandioxid-Nanopartikel in der Anatas-Modifikation mit einer Partikelgröße von 8,2 nm handelte.

In der DE 10 2006 032 755 A1 wird die Herstellung stabiler Dispersionen von Nanopartikeln beschrieben. Hierfür wird ein Titanalkoholat in einem Lösungsmittel mit einer polaren Verbindung komplexiert/chelatisiert wie z.B. in EP 1 045 015 A1 beschrieben und anschließend mit Wasser hydrolysiert. Nach Einengen erhält man einen pulverförmigen Feststoff, der in Wasser oder wässriger Lösung einer Hydrothermalbehandlung unterzogen wird. Die resultierenden Suspensionen enthalten einen gewissen Anteil an funktionellen Gruppen. Sie sind rein wässrig oder basieren auf einem Gemisch aus Wasser und organischen Lösungsmitteln.

Die Herstellung von Titandioxid-Nanopartikeln durch Solvothermalsynthese ausgehend von Titanhalogeniden oder -alkoxiden unter Zugabe von stabilisierenden, chelatisierenden Agentien ist in einigen wenigen Publikationen erwähnt. H. Kominami et al. (siehe a.a.O.) vermischten Titanacetylacetonat unter Zugabe von Natriumacetat mit Ethylenglycol und autoklavierten die Mischung bei 300°C für 2h. Dabei gaben sie eine geringe Menge Wasser zwischen das Reaktionsgefäß und die Autoklavenwandung, das bei erhöhter Temperatur verdampfte und die zur Bildung von Titandioxid notwendige Hydrolysereaktion der Titanverbindung unterstützte. Durch diese Vorgehensweise resultierte ein Pulver von agglomerierten Titandioxid-Nanopartikeln mit Brookit-Struktur, dessen Differential-Thermoanalyse zeigte, dass an der Oberfläche der Teilchen noch organische Einheiten hafteten. Brookit ist eine in der Photokatalyse weniger effiziente Form von Titandioxid als Anatas, weshalb Brookit industriell für diesen Anwendungsbereich nicht genutzt wird.

Die vorstehende Übersicht zeigt, dass es trotz einer intensiven Forschung auf diesem Gebiet bisher nicht gelungen ist, ein zuverlässiges Verfahren zur Herstellung gegebenenfalls hochkonzentrierter, langzeitstabiler Dispersionen oder Suspensionen von Titandioxid-Teilchen im unteren Nanometerbereich (durchschnittlich bis < 30 nm Durchmesser, vorzugsweise ab ca. 5 nm; die Größenangabe bezieht sich auf Messungen mittels XRD/Scherrer-Methode) mit hoher Kristallinität in organischen Lösungsmitteln bereitzustellen.

Dies wäre jedoch außerordentlich wünschenswert, weil Partikel in der genannten Größe für Anwendungen auf dem Gebiet der photokatalytisch aktiven Oberflächen dringend benötigt werden, und zwar möglichst in Form von Anatas-Kristallen, die als lagerstabile, möglichst hochkonzentrierte Dispersion (gegebenenfalls auch in Gelform) vorliegen und gegebenenfalls nach Isolierung in geeigneten, im Wesentlichen nichtwässrigen Lösungsmitteln redispergierbar sind. Lösungsmittelbasierte, gegebenenfalls vollständig wasserfreie, stabile Dispersionen von Titandioxid-Nanopartikeln besitzen für die Weiterverarbeitung in lösungsmittelbasierten Synthesen, polymeren Matrices o.ä. gegenüber wässrigen Dispersionen einen bedeutenden Vorteil. Diese sollten sich möglichst einfach, ohne mechanische Dispergierverfahren oder den Zusatz von Dispergierhilfen und in wenigen Schritten, vor allem unter Vermeidung der Notwendigkeit einer nachträglichen Oberflächenmodifizierung, und damit kostengünstig herstellen lassen. Dabei soll auf aufwändige Mahl- und Dispergierverfahren verzichtet werden können.

Titandioxid ist wie erwähnt ein Photokatalysator, in dem durch die Absorption von Photonen im UV-A-Wellenlängenbereich des Lichts die Bildung stark oxidierend wirkender Ladungsträger initiiert wird. Diese führen dann, wenn die Titandioxidteilchen in organische Lacke und Nanokomposite eingearbeitet sind, zur Degradation der Schichtmatrix durch Photooxidation. In der Folge führt das sog. "Kreiden" TiO₂-gefüllter Lacke und Nanokomposite ggf. bei gleichzeitiger Verfärbung zur Freilegung der Nanopartikel, die dann als mehr oder weniger loses Pulver auf der Oberfläche liegen. Es ist daher wünschenswert, die UV-Stabilität solcher Lacke und Nanokomposite zu verbessern.

Für die Anwendung von Titandioxid (Anatas, Rutil) als Weißpigment in nicht transparenten Farben, Kunststoffen und kosmetischen Produkten (Größe der Nanopartikel(-Agglomerate) > 100 nm) existieren bereits Vorschläge, um die photokatalytische Zersetzung der umgebenden Matrices zu vermeiden und damit die UV-Stabilität der Produkte zu gewährleisten. Dazu zählen der Einbau von Metallkationen in das Kristallgitter und eine Beschichtung der Pigmentoberfläche. Solche Beschichtungen sind beispielsweise in US 6,605,147 B2 und der darin zitierten Literatur, in DE 101 53 640 A1, in O.K. Perle et al., Colloids and Surfaces A: Physicochem. Ety. Aspects 257-258 (2005) 261-265 oder in A. Jaroenworaluek et al. in Surface and Interface Analysis, Surf. Interface Anal. 2006; 38: 473 beschrieben. Beschichtete TiO₂-Teilchen werden häufig als UV-Absorber in Sonnencremes verwendet.

WO 2006/037591 schlägt eine Oberflächenmodifizierung von insbesondere Zirkoniumdioxid-Teilchen vor, die dadurch erhalten werden kann, dass die Teilchen mit dem oberflächenmodifizierenden Mittel in einem Dispergiermittel einer mechanischen Beanspruchung unterzogen werden. Als Modifizierungsmittel wird eine Vielzahl von Substanzen vorgeschlagen, darunter Silane mit hydrolysierbaren und nichthydrolysierbaren Resten.

Es fehlt jedoch bisher an einem brauchbaren Vorschlag, wie durch Photooxidation zersetzbare oder zumindest abbaubare, transparente, organische Kunststoffe oder anorganisch-organische Hybridpolymere, die mit Titandioxid-Partikeln gefüllt sind, geschützt werden könnten.

DE 10 2007 040641 A1 offenbart Partikel mit einem Kern aus Metalloxid. EP 0 688 834 A1 offenbart Partikel aus TiO₂ (Anatas), die durch Hydrolyse von Titanoxychlorid in Gegenwart von Zitronensäure erhalten wurden und einen Partikeldurchmesser von 20 bis 30 nm aufweisen. Diese TiO₂-Partikel werden mit SiO₂ beschichtet und anschließend mit Octyltrimethoxysilan umgesetzt. SEONG YONG BAEK, SEUNG YONG CHAI, KAP SOO HUR, AND WAN IN LEE: "Synthesis of Highly Soluble Ti02 Nanoparticle with Narrow Size Distribution", BULL. KOREAN CHEM. SOC., Bd. 26, Nr. 9, 2005, Seiten 1333-1334, XP002576492, offenbart ein Verfahren zum Herstellen von Dispersionen von Titandioxid-Nanopartikeln.

Eine Aufgabe der vorliegenden Erfindung ist die Bereitstellung bevorzugter bzw. speziell einsetzbarer Dispersionen hochkristalliner Partikel mit einstellbarer Partikelgröße vorzugsweise im Bereich von durchschnittlich unter 30 nm mit hohem Feststoffanteil der Dispersionen und guter Redispergierbarkeit der Partikel, bei denen die photokatalytische Aktivität des Titandioxids so modifiziert ist, dass eine umgebende organische Matrix nicht oder zumindest deutlich weniger als im Stand der Technik geschädigt wird.

Die vorliegende Erfindung stellt Partikel mit einem kristallinen Kern aus Titandioxid, ein Verfahren zum Herstellen der Partikel, die Verwendung der Partikel sowie ein Verfahren zum Herstellen einer Dispersion von mit organischen Gruppen oberflächenbelegten Titandioxid-Partikeln mit einer Teilchengröße im Bereich von durchschnittlich ≤ 30 nm, gemessen mittels XRD/Scherrer-Methode, bereit.

Die Bereitstellung von stabilen Dispersionen, die kristalline, oberflächenmodifizierte, nanoskalige Titandioxid-Partikel in organischen Lösungsmitteln enthalten, erfolgt durch Verfahren, welche die folgenden Schritte umfassen:
(A) aus einer löslichen Vorstufe, die durch Hydrolyse komplexierter Titanhalogenide oder -alkoxide nach dem Sol-Gel Verfahren darstellbar ist, wird eine kolloiddisperse Lösung in organischen Lösungsmitteln her- bzw. bereitgestellt,
(B) die gebildete kolloiddisperse Lösung wird bei etwa 50°C bis etwa 100°C, vorzugsweise bei etwa 70°C bis etwa 90°C, zur Entfernung nicht umgesetzter Ausgangsmaterialien und leichtflüchtiger Produkte eingeengt, wobei sich ein Material bildet, das bereits Titandioxid-Vorstufen enthält.
(C-1) Das Produkt der Stufe (B) wird in einem organischen Lösungsmittel aufgenommen, und die dabei entstehende Lösung wird in einem abgeschlossenen Druckbehälter autoklaviert, d.h. ohne Druckausgleich erwärmt. Durch fortschreitende Thermohydrolyse und -kondensationsreaktionen in Anwesenheit von geringen Mengen Wasser (das entweder im Lösungsmittel enthalten ist und/oder als Restwasser dem Produkt der Stufe (B) anhaftet) entsteht während dieses Schritts eine auf dem organischen Lösungsmittel basierende Dispersion oder gelartige Masse, die in ihrem Netzwerk eingebettete, bereits oberflächenmodifizierte, kristalline Titandioxid-Nanopartikel enthält.
(C-2) Das Produkt der Stufe (B) kann stattdessen in Wasser aufgenommen werden, und
   (C-2-a) die dabei entstehende Lösung wird in einem abgeschlossenen Druckbehälter autoklaviert, d.h. ohne Druckausgleich erwärmt. Durch fortschreitende Thermohydrolyse und -kondensationsreaktionen entsteht während dieses Schritts eine wasserbasierte Dispersion oder gelartige Masse, die in ihrem Netzwerk eingebettete, in einem gewissen Ausmaß bereits oberflächenmodifizierte, kristalline Titandioxid-Nanopartikel enthält, wie in DE 102006032755 A1 beschrieben, wonach
   (C-2-b) das Produkt der Stufe (C-2) mit einem Alkohol mit vorzugsweise mindestens 4 Kohlenstoffatomen, z.B. n-Butanol, gemischt wird.

Die entstehenden Dispersionen können sowohl im Fall von C-1 als auch im Fall von C-2 eingeengt werden, bis ein Pulver erhalten wird, das die oberflächenmodifizierten, kristallinen Titandioxid-Nanopartikel enthält und in organischen Lösungsmitteln leicht redispergierbar ist.

Je nach Bedarf kann die Dispersion/das Gel/das Pulver direkt eingesetzt werden, oder es kann durch Zugabe von Lösungsmittel durch bloßes Aufrühren in eine (stärker verdünnte) nanopartikuläre Dispersion überführt werden und zum Einsatz kommen.

Günstig ist bei der Variante (C-1), dass bei den erfindungsgemäß hergestellten Nanopartikeln die maßgeschneiderte Oberflächenmodifizierung bereits in situ erzeugt wird, wodurch der Schritt der nachträglichen Oberflächenmodifizierung wegfallen kann. Im Gegensatz zu Synthesen von Titandioxid-Nanopartikeln durch thermische Behandlung wässriger Lösungen (Produkt der Stufe C-2) liegt ein wertvoller Vorteil dieser Variante insbesondere darin, dass lösungsmittelbasierte, stabile Dispersionen von Titandioxid-Nanopartikeln (Produkt aus Stufe C-1) direkt zugänglich sind. Diese besitzen für die Weiterverarbeitung in lösungsmittelbasierten Systemen, polymeren Matrices o.ä. gegenüber wässrigen Dispersionen einen bedeutenden Vorteil.

Die erfindungsgemäß hergestellten Dispersionen (Produkt aus Stufe C-1) können Titandioxid-Partikel in einem Anteil von bis zu ca. 35 Gew.-% (etwa 4,4 mol/kg) (gemessen am Gehalt kristallinen Titandioxids nach dem Ausglühen der Lösungen) oder sogar noch darüber, z.B. bis zu ca. 40 Gew.-%, aufweisen. Vorzugsweise enthalten sie Titandioxid-Partikel in einem Anteil von mindestens 15 Gew.-%, stärker bevorzugt von mindestens 25 Gew.-%. Natürlich können mit dem erfindungsgemäßen Verfahren auch stärker verdünnte Dispersionen erzeugt werden, beispielsweise bis hinunter zu 1 Gew.-%. Die Konzentration am Titandioxid-Partikeln in den Dispersionen, die gemäß Stufe C-2-a erhalten werden, liegen bei bis zu ca. 25 Gew.%, vorzugsweise bis zu 15 Gew.-%; die Produkt aus Stufe C-2-b können nach dem Einengen zum Pulver bis zu 70 - 85 Gew.%, nach dem Redispergieren des Pulvers bis zu 30 Gew.%, vorzugsweise bis zu 25 Gew.% Partikel enthalten.

Die Größe der Teilchen liegt im oben als wünschenswert angegebenen Bereich, bezogen auf die mittlere Kristallit-Größe (bestimmt mittels Scherrer-Methode aus dem Röntgendiffraktogramm am 101-Reflex von Anatas).

Die löslichen Vorstufen in Schritt (A) können in Form von Pulvern, Harzen oder Flüssigkeiten vorliegen. Auch die in Schritt (B) nach Einengen der Lösung erhaltenen Produkte können diese Form haben. Durch Zugabe von organischen Lösungsmitteln oder, weniger bevorzugt, Wasser erhält man durch bloßes Aufrühren eine transparente, in Abhängigkeit der Ausgangsverbindungen gefärbte kolloiddisperse Lösung. Die kristallinen, oberflächenmodifizierten, nanoskaligen Titandioxid-Partikel liegen demnach bevorzugt in organischen Lösungsmitteln dispergiert vor. Bei den organischen Lösungsmitteln kann es sich um polare als auch unpolare und aprotische Lösungsmittel handeln.

Als Titanausgangsverbindungen können Titanhalogenide wie TiCl₄ oder TiOCl₂ oder Titanalkoxide, insbesondere der allgemeinen Formel Ti(OR)₄ dienen, worin R ein geradkettiger, verzweigter oder cyclischer Alkylrest mit vorzugsweise 1 bis 6 Kohlenstoffatomen ist. Beispiele sind Titanethylat, -propylat, -butylat. Zur Stabilisierung der Titan-Verbindungen können als chelatisierende Agentien beispielsweise Diketone, β-Ketoester, Glykolether, Diole, mehrwertige Alkohole, Aminoalkohole, Glycerin, Aminothiole, Dithiole, Diamine, Carbonsäuren, Dicarbonsäuren, Ketocarbonsäuren oder Ketoalkohole oder Mischungen der voranstehenden Agentien eingesetzt werden. Der Komplexligand wird hierbei in günstiger Weise in einer Menge von 0,5 bis 20 mol/mol, vorzugsweise 0,5 bis 5 mol/mol, bezogen auf die verwendete Titanverbindung, eingesetzt und vorzugsweise zur vorgelegten Titanverbindung unter Rühren zugetropft.

Anschließend wird durch Zutropfen einer entsprechenden Menge Wasser eine Hydrolyse der Titanverbindung bewirkt. Wasser wird hierfür vorzugsweise in einer Menge von 0,5 bis 20 mol/mol, stärker bevorzugt von 1 bis 10 mol/mol, zugesetzt. Zur gezielten Steuerung der Hydrolyse- und Kondensationsreaktionen bei der Herstellung der löslichen Vorstufe können dem Hydrolysewasser anorganische und/oder organische, saure oder basische Katalysatoren wie HCl, HNO₃, H₃PO₄, H₂SO₄, NaOH, KOH, NH₃, organische Carbon-, Phosphor- oder Sulfonsäuren, Amine etc. in einer Menge von bis zu 1 mol/mol, bevorzugt 0,001-0,3 mol/mol, bezogen auf die verwendete Titanverbindung, zugesetzt werden.

Weiterhin können mit dem Hydrolysewasser gelöste Salze mit Metallkationen beliebiger Elemente in einer Menge von bis zu 15 mol%, bezogen auf Titan, zugegeben werden. Die solvothermal synthetisierten Titandioxid-Nanopartikel fallen auf diese Weise in mit Fremdionen dotierter Form an. Durch die Art und Konzentration der Dotierung kann beispielsweise die photokatalytische Aktivität der Titandioxid-Nanopartikel gesteigert oder aber, falls es die Anwendung erfordert, vermindert werden.

Leichtflüchtige nicht umgesetzte Ausgangsstoffe und gebildete Reaktionsprodukte werden danach am Rotationsverdampfer bei Temperaturen von vorzugsweise 50 bis 100°C, stärker bevorzugt von 70 bis 90°C, entfernt. Der Rückstand kann als farbloses, gelbes bis rötlich braunes Pulver, als Harz oder als viskose Flüssigkeit anfallen. Diese Zwischenstufe ist beliebig lange lagerbar.

Die Zwischenstufe wird anschließend in einem organischen Lösungsmittel oder einem Lösungsmittelgemisch durch Rühren gelöst, und die erhaltene kolloiddisperse Lösung wird anschließend in einen Druckbehälter überführt. Als Lösungsmittel können Alkohole, insbesondere C₁-C₆-Alkohole wie Ethanol, 1-Propanol, 2-Propanol, Butanol oder aber andere, weniger polare Lösungsmittel wie Chloroform oder Toluol oder Mischungen dieser Lösungsmittel herangezogen werden. In der Regel ist es nicht notwendig, die Bildung und Kristallisation der Nanopartikel durch die Zugabe einer geringen Menge Wasser zu unterstützen, da bzw. soweit eine solche Wassermenge bereits mit der Zwischenstufe in das Reaktionsmedium der Solvothermalbehandlung eingeschleppt wurde. Eine kleine Menge an zusätzlichem Wasser hat sich jedoch in vielen Fällen als nicht schädlich erwiesen. Soll beispielsweise Ethanol als organisches Lösungsmittel eingesetzt werden, so ist es häufig nicht notwendig, absoluten Alkohol einzusetzen; die Azeotrop-Form oder ähnliche Konzentrationen im Gemisch mit Wasser sind ausreichend. Bevorzugt sollte das Lösungsmittel allerdings nicht mehr als 10 Gew.-% Wasser enthalten, stärker bevorzugt nicht mehr als 5 Gew.-%.

Die für die Herstellung der Titandioxid-Nanopartikel eingesetzten kolloiddispersen Lösungen zeichnen sich durch eine aufgrund von fortschreitenden Hydrolyse- und Kondensationsreaktionen auftretende Bildung eines gelartigen Netzwerks bei Zufuhr von thermischer Energie in einem abgeschlossenen Druckbehälter aus. Während des Verlaufs der Thermalbehandlung kommt es in diesem Gelnetzwerk zur Nukleation von kristallinen Titandioxid-Keimen im Größenbereich von 4 nm, die in den durch das Gelnetzwerk festgelegten Kompartimenten weiter wachsen.

Das Verfahren zeichnet sich dadurch aus, dass die Größe der Nanopartikel und die Kristallinität der Nanopartikel durch die Zeitspanne und die Temperatur während der Solvothermalbehandlung gesteuert werden kann. Dabei nimmt die Partikel-/Kristallitgröße mit zunehmender Temperatur und mit zunehmender Zeit zu. Die Zeitspanne kann dabei bei wenigen Minuten bis mehreren Stunden liegen, vorzugsweise bei 30 Minuten bis 20 Stunden. Der Temperaturbereich umfasst 70°C bis 300°C, vorzugsweise 120°C bis 220°C. Der sich dabei aufbauende Druck ist abhängig vom eingesetzten Lösungsmittel; er kann ggf. bis auf 25 bar steigen. Mit Hilfe der zu wählenden Prozessparameter und der Art der Oberflächenmodifizierung (durch die Wahl des/der komplexierenden Agentien) ist die Größe der Nanopartikel variabel einstellbar. Natürlich liegen in jeder einzelnen herzustellenden Dispersion diese Partikel in einer Gauß'schen Größenverteilungskurve vor.

Zeitspanne und Temperaturbereich werden so eingestellt, dass das komplexierende Agens endständige Titanatome auf der Oberfläche der Nanopartikel weiterhin stabilisiert und organische Komponenten im gebildeten Gel thermisch nicht geschädigt werden.

Nach dem Abkühlen und Öffnen des Druckbehälters erhält man ein farbloses bis rötlichbraunes, glasig schimmerndes Gel oder eine milchige Dispersion. Diese Gele oder Dispersionen sind in verschlossenen Behältern lagerbar und können bei Bedarf in Wasser oder organischen Lösungsmitteln durch bloßes Aufrühren redispergiert werden, um kolloiddisperse Lösungen in solchen Lösungsmitteln zu gewinnen, wie sie für die jeweilige Anwendung benötigt werden. Bei Bedarf können diese Dispersionen durch Filtration durch Filtermedien mit Poren im Bereich von vorzugsweise bis zu 1 µm aufbereitet werden. Weiterhin können die Gele bzw. Dispersionen direkt zur Einarbeitung in Sole, Lackformulierungen o.ä. eingesetzt werden. Sofern es die Anwendung erfordert, können die durch Solvothermalsynthese erhaltenen Dispersionen bzw. Gele auch durch das Entfernen leichtflüchtiger Komponenten, z.B. durch Einengen am Rotationsverdampfer, aufkonzentriert werden.

Die genannte Aufgabe der vorliegenden Erfindung kann durch eine Unterdrückung der photokatalytischen Aktivität des Titandioxids gelöst werden. Hierfür werden die Teilchen der Titandioxiddispersion mit einer dünnen, oxidischen, in der Regel transparenten (und meist farblosen) Schale (vorzugsweise aus SiO₂, aber beispielsweise statt dessen aus ZrO2, Al₂O₃, ZnO₂, CeO₂, In₂O₃, Y₂O₃, La₂O₃, Manganoxiden, Eisenoxiden wie Fe₂O₃, weiteren Übergangsmetalloxiden oder Mischoxiden, vor allem mit den Kationen der vorgenannten Oxide) beaufschlagt, deren Oberfläche weiterhin eine organische Oberflächenmodifizierung trägt. Im Bereich von Anwendungen, die auf der hohen Brechzahl von Titandioxid-Nanopartikeln beruhen, kann diese Schale vollständig geschlossen sein, wodurch die vollständige Unterdrückung des photokatalytischen Effekts von Titandioxid erreicht wird. Im Bereich der Anwendung photokatalytisch aktiv ausgerüsteter Lacke und Nanokomposite ist dagegen eine nur unvollständige Aufbringung einer oxidischen Schale auf die Titandioxid-Nanopartikel, die als Abstandshalter zur organischen oder hybridpolymeren Matrix dient, vorteilhaft. Die Transparenz muss dabei durch die sehr gute Dispergierbarkeit der Nanopartikel bis zum Primärpartikel (< 30 nm) gewährleistet bleiben.

Auf dem Gebiet der hochbrechend ausgerüsteten, nasschemisch verarbeitbaren Schichten ist die Verfügbarkeit von Titandioxid-Nanopartikeln, deren Oberfläche mit einer vollständig geschlossenen, anorganischen Schale (SiO₂, ZrO₂, etc.) belegt ist, aufgrund der herausragenden physikalisch-chemischen Eigenschaften von TiO₂ von großer Bedeutung. Es ist günstig, Schalendurchmesser im Bereich von etwa bis zu 10 nm, vorzugsweise von bis zu 5 nm vorzusehen.

Die Nanoteilchen sollen möglichst in Form einer lösungsmittelbasierten, hochkonzentrierten Dispersion vorliegen. Die agglomeratfreie Einarbeitung der Kern/Schale-Nanopartikel in lösungsmittelbasierte Formulierungen (z.B. Lacke, Harze, Polymere) lässt sich durch eine matrix-optimierte Oberflächenmodifizierung (z.B. mit funktionalisierten Silanen) gewährleisten; sie kann zu besonderen Eigenschaften führen (keine Nanopartikelmigration, mechanische Verstärkung der Matrix unter Erhalt der Transparenz).

Ein bevorzugtes Verfahren zum Erzeugen einer entsprechenden Titandioxidpartikel-Dispersion, die Kern/Schale-Nanopartikel mit einer organischen Oberflächenmodifizierung enthält, umfasst die folgenden Schritte:
(D) Es wird eine Dispersion eines oberflächenmodifizierten Titandioxid-Pulvers aus Nanopartikeln mit einem Durchmesser von durchschnittlich bis < 30 nm, vorzugsweise ab ca. 5 nm, gemessen mittels XRD/Scherrer-Methode, mit hoher Kristallinität in einem organischen Lösungsmittel oder einem Gemisch eines organischen Lösungsmittels und Wasser bereitgestellt. Dabei kann es sich um das oben beschriebene Produkt der Stufe (C-1) und/oder der Stufe (C-2) handeln, das in dem genannten Lösungsmittel/Lösungsmittel-Wasser-Gemisch redispergiert wurde. Durch die Einstellung des pH-Werts der Lösung auf z.B. <3 bzw. >9, je nach gewünschter Oberflächenmodifizierung (z.B. mit NH₃, HCl, etc.), erfolgt die vollständige Deagglomeration der Nanopartikel, so dass eine transparente Dispersion erhalten wird.
   Das Lösungsmittel bzw. -gemisch enthält bereits die die anorganische Schale bildende Komponente (z.B. Si-/Zr-/AI-Alkoxide, mit Chelatliganden oder anderweitig stabilisierte Alkoxide oder Salze dieser Kationen).
(E) Die Schalenbildung erfolgt durch Hydrolyse- und Kondensationsreaktionen der die oxidische Schale bildenden Komponente während des Rührens der Lösung über einen Zeitraum von vorzugsweise mindestens 12h. Dabei verdrängt das die Schale bildende Oxid die organischen Bestandteile, mit denen die modifizierten TiO₂-Teilchen belegt waren. Dennoch ist der Weg über den Einsatz organisch modifizierter TiO₂-Partikel notwendig, weil sie sich in Schritt (D) problemlos nanoskalig redispergieren lassen.
(F) Vorzugsweise wird aus dem Produkt der Stufe (E) das Lösungsmittel durch Einengen am Rotationsverdampfer teilweise entfernt.
(G) Die Oberflächenmodifizierung der Kern/Schale-Nanopartikel erfolgt nach Zugabe einer entsprechenden Komponente sowie ggf. Hydrolyse- und Kondensationsreaktionen während des Rührens der Lösung über einen Zeitraum von vorzugsweise mindestens 12h. Durch nachfolgendes Einengen der Lösung am Rotationsverdampfer erhält man eine Dispersion, die Kern/Schale-Nanopartikel mit einer organischen Oberflächenmodifizierung enthält und durch Zugabe von organischen Lösungsmitteln verdünnt werden bzw. in organische Formulierungen (z.B. Lacke, Harze, Polymer) eingearbeitet werden kann.

Die Steuerung der Bildung der Schale, wie vollständige Umhüllung bzw. unvollständige Umhüllung oder Dicke der umhüllenden Schicht, erfolgt dabei durch die Wahl des molaren Verhältnisses von TiO₂ und schalenbildender Komponente (vorzugsweise im Bereich von 1 zu 0,05 bis 1 zu 0,4, stärker bevorzugt von 1 zu 0,15 bis 1 zu 0,25), Menge des Lösungsmittel(-gemischs), der Rührgeschwindigkeit und -dauer, etc.

Die organische Oberflächenmodifizierung kann dann, wenn die Schale Metallatome mit d-Orbitalen aufweist, dieselben organischen Gruppen aufweisen wie das Produkt der Stufe C-1, also insbesondere Chelat- und andere Komplexliganden. Entsprechend können in solchen Fällen als Komponente, die zum Modifizieren der Oberfläche zugegeben wird, Mono- oder Polycarbonsäuren und insbesondere Dicarbonsäuren, aktivierte Säurederivate davon wie Säureanhydride, Aminosäuren, Carbonylverbindungen, Aminosäuren, Amine, Diketone und Diketonate, Ketocarbonsäuren, Ketoalkohole, β-Ketoester, Glykolether, Diole, mehrwertige Alkohole, Aminoalkohole, Glycerin, Aminothiole, Diamine und vergleichbare Verbindungen eingesetzt werden. Unabhängig von den elektronischen Konfigurationsmöglichkeiten der Metallatome der gewählten Oxidschale können im Übrigen zum Aufbringen der Oberflächenmodifizierung als Komponente, die zum Modifizieren der Oberfläche zugegeben wird, monomere oder vorvernetzte Verbindungen/Moleküle eingesetzt werden, die einen organischen Rest in hydrolytisch stabiler Form an ein Metallatom M gebunden tragen, das in der Lage ist, vorzugsweise über eine hydrolytische Kondensationsreaktion zugängliche M-O-M-Bindungen auszubilden. Hier sind in erster Reihe Silane zu nennen. Die Silane können die Formel (I)

RmR'nSiX4-m-n (I)

aufweisen, worin die Reste X gleich oder verschieden sind und Hydroxy oder hydrolytisch kondensierbare Reste, insbesondere Wasserstoff, Halogen, Alkoxy (als bevorzugte Reste; besonders bevorzugt weisen sie 1 bis 6 oder sogar nur 1 bis 4 Kohlenstoffatome auf), Acyloxy, Alkylcarbonyl, Alkoxycarbonyl oder -NR" mit R" gleich Wasserstoff und/oder Alkyl bedeuten und die Reste R und R' jeweils gleich oder verschieden sein können. R bedeutet unsubstituiertes oder substituiertes, geradkettiges, verzweigtes oder cyclisches Alkyl, Alkenyl, Alkinyl, Aryl, Arylalkyl, Alkylaryl, Arylalkenyl, Alkenylaryl, Arylalkinyl, worin die Kohlenstoffkette bei Bedarf durch Sauerstoff- oder Schwefelatome oder durch die Gruppe -NR" mit R" gleich Wasserstoff oder Alkyl unterbrochen sein kann. Die Substitution kann beispielsweise eine solche mit Halogenatomen sein. Insbesondere können die Reste R gar nicht, ganz oder teilweise mit Fluor substituiert sein. R' ist ein Rest, bei dem es sich ebenfalls um ein unsubstituiertes oder substituiertes, geradkettiges, verzweigtes oder cyclisches Alkyl, Alkenyl, Alkinyl, Aryl, Arylalkyl, Alkylaryl, Arylalkenyl, Alkenylaryl, Arylalkinyl handelt, das einen oder mehrere, ggf. gleiche oder unterschiedliche reaktive Substituenten trägt, beispielsweise ihrerseits unsubstituierte oder substituierte Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Urethangruppen. m und n können jeweils 0, 1, 2 oder 3 bedeuten, m+n können zusammen 1, 2 oder 3 sein. Beispiele für Reste R sind Methyl, Ethyl, längerkettige Alkyle, Phenyl, vinylgruppenhaltige Reste, norbornengruppenhaltige Reste oder Reste, die über einen Spacer, beispielsweise eine Alkylenkette, eine mesogene Gruppe tragen, Beispiele für Reste R' sind Gruppen, die ihrerseits organisch polymerisierbar sind oder eine organische Kondensationsreaktion eingehen können, z.B. vinyl- oder allylgruppenhaltige Reste, (meth-)acrylsäurehaltige Reste, carbonsäurehaltige Reste, acetathaltige Reste, cyanathaltige Reste, Reste mit einer oder mehreren freien Hydroxy-, Carboxy- oder Aminogruppen oder epoxidhaltige Reste. In bevorzugten Ausführungsformen ist m gleich 1 und/oder n gleich 1. Silane der Formel (I) mit m+n gleich 1 und X gleich Alkoxy, insbesondere Methoxy oder Ethoxy, sind besonders bevorzugt.

Die Länge der Kohlenstoffketten der genannten Reste ist prinzipiell nicht beschränkt; bevorzugt sind 1 bis 25, stärker bevorzugt 1 bis 15 Kohlenstoffatome für aliphatische Ketten und 6 bis 50, stärker bevorzugt bis 25 Kohlenstoffatome für aromatische Systeme.

Wenn eine nicht zu dichte Oberflächenbelegung mit organischen Gruppen gewünscht wird, können die obigen Silane mit Metallverbindungen der Formel M^{a}(X)ₐ "verdünnt" werden, wobei sich als Metalle M dreiwertige (a = III, 3) und vierwertige (a = IV, 4) Metalle eignen, die hydrolytisch kondensierbare Reste X aufweisen, wobei X wie oben für das Silan der Formel (I) definiert ist und vorzugsweise ein Alkoxyrest ist. Beispiele für diese Metallverbindungen sind Tetralkoxysilane, Trialkoxyaluminate und dergleichen.

In besonders bevorzugten Ausführungsformen wird die Oberflächenmodifizierung so gewählt, dass die Partikel agglomeratfrei in organische oder hybridpolymere Formulierungen, z.B. Lacke, Harze oder Polymere aus rein organischen oder anorganisch-organischen Polymeren (worunter vor allem organisch modifizierte Silicium(hetero)polykondensate zu rechnen sind) eingearbeitet und dabei gegebenenfalls einpolymerisiert / mit der Formulierung vernetzt werden können. Silicium(hetero)polykondensate sind in großer Anzahl beschrieben worden; insbesondere sind sie als ORMOCER®e bekannt. Stellvertretend für die Nennung einer Vielzahl von Dokumenten, in denen sie beschrieben sind, sei hier auf das Review von G. Schottner "Hybrid Sol-Gel-Derived Polymers: Applications of Multifunctional Materials" in Chem. Mater. 2001 (13), 3422-3435, verwiesen. Die Materialien eignen sich für eine Vielzahl von Anwendungen wie der Herstellung von (massiven) Körpern, Beschichtungen und Fasern, denen mit ihrer Hilfe die unterschiedlichsten Eigenschaften verliehen werden können. Insbesondere sei auf sehr kratzfeste, häufig transparente Beschichtungen und Körper mit gegebenenfalls hohen Brechzahlen verwiesen.

Die organische Oberflächenmodifizierung der Partikel kann beispielsweise mit Hilfe funktioneller Silane erfolgen, die durch Auswahl der funktionellen Gruppen an die jeweilige Matrix angepasst sind (z. B. Alkylsilane für hydrophobe, organische Matrices ohne reaktive Anbindung, Acrylat- oder Methacrylatgruppen für die reaktive Anbindung an UV-vernetzbare, organische Polymere oder Nanokomposite, Aminosilane oder Epoxysilane für die reaktive Anbindung an thermisch vernetzende organische Polymere oder Nanokomposite). Beispiele für derartige organische oder hybridpolymere Formulierungen sind Duroplaste oder - bevorzugt - Thermoplaste, z.B. aus der Gruppe der Polyamide, -carbonate, -ethylene-, proplyene, acrylate, -
methacrylate, -vinylchloride, -acetate, -ketone, -urethane sowie entsprechende Copolymere. Insbesondere ist die Erfindung dabei interessant für transparente Materialien, wie bereits eingangs dargelegt.

Die Erfindung soll nachstehend anhand von Ausführungsbeispielen näher erläutert werden.

### Ausführungsbeispiel 1:

In einem 2 I-Rundkolben werden 0,6 mol Titantetraethylat vorgelegt und anschließend unter Rühren 1,5 mol 2-(2-Methoxyethoxy)essigsäure mit Hilfe eines Tropftrichters zugetropft. Die Lösung wird 1,5h weitergerührt und anschließend unter Zugabe von 10 mol Wasser hydrolysiert. Nach dem vollständigen Entfernen aller flüchtigen Bestandteile am Rotationsverdampfer bei einer Temperatur des Wasserbades von ca. 85°C wird ein harzähnliches Produkt erhalten.

In einem 100 ml-Schraubdeckelgefäß werden 17,5 g des harzähnlichen Produkts nach Zugabe von 42,5 g Ethanol unter Rühren gelöst. Nachdem eine klare Lösung entstanden ist, wird diese in ein Teflon-Gefäß überführt, und dieses wird mit Dichtring und Deckel versehen in einem Autoklaven verschlossen. Der Autoklav wird in einen Umluftofen gestellt, dieser auf 160°C aufgeheizt und für weitere 4h darin belassen. Nach dieser Zeit wird der Autoklav herausgenommen, nach dem Abkühlen geöffnet und die erhaltene weißgefärbte, gallertartige Masse in ein luftdicht verschließbares Schraubgefäß überführt. In der weißen, gallertartigen Masse sind Titandioxid-Nanopartikel mit einer mittleren Kristallitgröße von 9 nm enthalten.

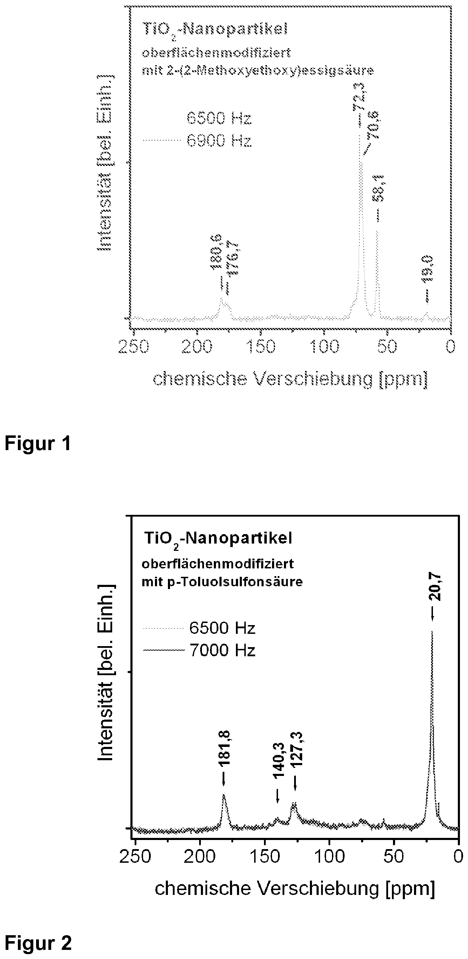

Das ¹³C-VACP/MAS NMR-Spektrum eines Pulvers von TiO₂-Nanopartikeln modifiziert mit 2-(2-Methoxyethoxy)essigsäure, hergestellt nach dem Verfahren des Beispiels 1, ist in **Figur 1** gezeigt.

### Ausführungsbeispiel 2:

In einem 2 I-Rundkolben werden 1,5 mol Titantetraethylat vorgelegt und anschließend unter Rühren 1,0 mol Acetylaceton mit Hilfe eines Tropftrichters zugetropft. Die Lösung wird 1,5 h weitergerührt und anschließend unter Zugabe von 0,10 mol p-Toluolsulfonsäure gelöst in 10 mol Wasser hydrolysiert. Nach dem vollständigen Entfernen aller flüchtigen Bestandteile am Rotationsverdampfer bei einer Temperatur des Wasserbades von ca. 85°C wird ein Pulver erhalten.

In einem 1000 ml-Schraubdeckelgefäß werden 221,5 g des Pulvers (TiO₂-Oxidgehalt: 55,2 Gew.%) nach Zugabe von 799,2 g Ethanol unter Rühren gelöst. Nachdem eine klare Lösung entstanden ist, wird diese in ein Teflon-Gefäß überführt, und dieses wird mit Dichtring und Deckel versehen in einem Autoklaven verschlossen. Der Autoklav wird in einen Umluftofen gestellt, dieser auf 160°C aufgeheizt und für weitere 16h darin belassen. Nach dieser Zeit wird der Autoklav herausgenommen, nach dem Abkühlen geöffnet und die erhaltene weißgefärbte, gallertartige Masse in ein luftdicht verschließbares Schraubgefäß überführt.

Das ¹³C-VACP/MAS NMR-Spektrum eines Pulvers von TiO₂-Nanopartikeln modifiziert mit p-Toluolsulfonsäure, hergestellt nach dem Verfahren des Beispiels 2, ist in **Figur 2** dargestellt.

### Ausführungsbeispiel 3

21,75 g der gallertartigen Masse des Beispiels 2 werden in einem Gemisch von 400 g Ethanol, 1,99 g Tetramethoxysilan, 725,23 g Wasser gemischt mit 16,17 g 25 %-iger NH₄OH-Lösung redispergiert (pH ≈ 9 - 10). Anschließend wird über Nacht gerührt. Die erhaltene, kolloidale Lösung wird auf die Hälfte eingeengt und mit 6 g 3-Glycidyloxipropyltrimethoxysilan versetzt. Nach erneutem Rühren über Nacht wird eingeengt, bis eine ca. 6%ige Dispersion (an TiO₂) erhalten wird, die wiederum als fleischfarbene, gallertartige Masse erhalten wird. Die gallertartige Masse kann zur Weiterverarbeitung in organischen Lösungsmitteln aufgenommen werden bzw. kann agglomeratfrei in organische und hybridpolymere Formulierungen (z.B. Lacke, Harze, Polymere eingearbeitet werden.

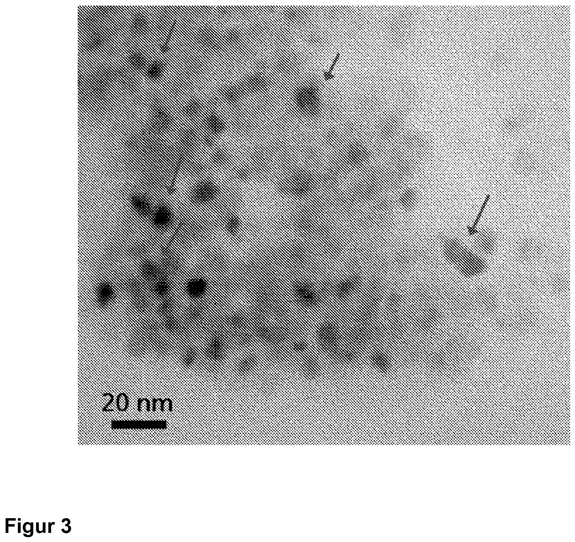

**Figur 3** ist eine transmissionselektronenmikroskopische Aufnahme von TiO₂/SiO₂-Kern/Schale-Nanopartikeln (deutlich erkennbare Schalen sind mit Pfeilen gekennzeichnet).

## Patentansprüche

1. Partikel mit einem kristallinen Kern aus Titandioxid mit einem durchschnittlichen Durchmesser, gemessen mittels XRD/Scherrer-Methode, von ≤ 30 nm, einer Schale aus einem Metalloxid, das keine photokatalytischen Eigenschaften besitzt, sowie einer Außenhaut, die organische Reste trägt, wobei die organischen Reste der Außenhaut ausgewählt sind unter über ein Kohlenstoffatom angebundenem, geradkettigem, verzweigtem oder cyclischem Alkyl, Alkenyl, Alkinyl, Aryl, Arylalkyl, Alkylaryl, Arylalkenyl, Alkenylaryl, Arylalkinyl, das mit einem oder mehreren reaktiven Resten substituiert ist, insbesondere ausgewählt unter solchen, die ihrerseits unsubstituierte oder substituierte Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Urethangruppen sind oder tragen oder Mischungen solcher Gruppen tragen und dessen Kohlenstoffkette durchgehend ist oder durch Sauerstoff- oder Schwefelatome oder durch die Gruppe -NR" mit R" gleich Wasserstoff oder Alkyl unterbrochen sein kann,
**dadurch gekennzeichnet, dass** die Metalloxid-Schale ohne photokatalytische Eigenschaften den Kern vollständig, vorzugsweise mit einer Dicke von bis zu 10 nm, stärker bevorzugt mit einer Dicke von bis zu 5 nm umhüllt, oder dass sie den Kern nur teilweise umgibt.

2. Partikel nach Anspruch 1, worin das Metalloxid SiO₂ ist.

3. Partikel nach einem der Ansprüche 1 oder 2, **dadurch gekennzeichnet, dass** die Außenhaut in monomolekularer Schicht vorliegt, vorzugsweise in Form einer Metalloxidschicht, deren Metallatome ganz oder teilweise mit mindestens einer Gruppe wie in Anspruch 1 definiert substituiert sind.

4. Verfahren zum Herstellen von Partikeln gemäß einem der Ansprüche 1 bis 3, umfassend die folgenden Schritte:
(D) Bereitstellen einer Dispersion von mit organischen Gruppen oberflächenmodifizierten, kristallinen Titandioxid-Partikeln mit einem Durchmesser von durchschnittlich ≤ 30 nm in einer Lösung, die eine gelöste, hydrolytisch kondensierbare Verbindung eines Metalls M enthält, dessen Oxid die genannte Schale bilden soll, wobei als Lösungsmittel ein organisches Lösungsmittel oder ein Gemisch eines organischen Lösungsmittels und Wasser eingesetzt wird, und Einstellen des pH-Werts der Lösung derart, dass eine vollständige Deagglomeration der Nanopartikel erfolgt,
(E) Bewegen der Dispersion in Gegenwart einer für die hydrolytische Kondensation der gelösten, hydrolytisch kondensierbaren Verbindung des Metalls M ausreichenden Wassermenge, bis die organischen Bestandteile, mit denen die modifizierten TiO₂-Partikel belegt waren, verdrängt und eine oxidische Schale des Metalls M gebildet ist,
(F) bevorzugt zumindest teilweises Entfernen des Lösungsmittels/Wassers aus dem Produkt der Stufe (E),
(G) Zugeben einer die Oberfläche der oxidischen Schale modifizierenden Komponente zu dem Produkt der Stufe (F) und Bewirken des Entstehens einer Außenhaut, die organische Gruppen aufweist, mit Hilfe dieser Komponente auf den Partikeln, wobei man eine Dispersion von oberflächenmodifizierten Partikeln erhält.

5. Verfahren nach Anspruch 4, worin die hydrolytisch kondensierbare Verbindung des Metalls M ausgewählt ist unter Alkoxysilanen.

6. Verfahren nach Anspruch 4 oder 5, worin die die Oberfläche der oxidischen Schale modifizierende Komponente ausgewählt ist unter Metallverbindungen, die einen organischen Rest über ein Kohlenstoffatom gebunden an Metallatomen M dieser Verbindung sowie einen hydrolytisch kondensierbaren Rest tragen, und worin das Bewirken des Entstehens einer Außenhaut, die organische Gruppen aufweist, das Lösen dieser Komponente in Wasser oder einem Lösungsmittel, das eine ausreichende Menge an Wasser für die hydrolytische Kondensation dieser Komponente enthält, und das Abscheiden der hydrolysierten Verbindung in Form eines Kondensats auf der Oberfläche der Partikel umfasst.

7. Verfahren nach Anspruch 6, worin die Metallverbindungen, die einen organischen Rest über ein Kohlenstoffatom gebunden an Metallatomen M sowie einen hydrolytisch kondensierbaren Rest tragen, ausgewählt sind unter Silanen der Formel (I)
RₘR'ₙSiX₄₋ₘ₋ₙ (I)
worin X gleich oder verschieden ist und ein in Gegenwart von Wasser und gegebenenfalls einem Katalysator hydrolysierbarer Rest, insbesondere ein Alkoxid ist, R gleich oder verschieden ist und unsubstituiertes oder substituiertes, geradkettiges, verzweigtes oder cyclisches Alkyl, Alkenyl, Alkinyl, Aryl, Arylalkyl, Alkylaryl, Arylalkenyl, Alkenylaryl, Arylalkinyl bedeutet, worin die Kohlenstoffkette ununterbrochen oder durch Sauerstoff- oder Schwefelatome oder durch die Gruppe -NR" mit R" gleich Wasserstoff oder Alkyl unterbrochen sein kann, R' gleich oder verschieden ist und unsubstituiertes oder substituiertes, geradkettiges, verzweigtes oder cyclisches Alkyl, Alkenyl, Alkinyl, Aryl, Arylalkyl, Alkylaryl, Arylalkenyl, Alkenylaryl, Arylalkinyl bedeutet, das einen oder mehrere, ggf. gleiche oder unterschiedliche Substituenten trägt, ausgewählt unter Substituenten, die ihrerseits unsubstituierte oder substituierte Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Urethangruppen sind oder tragen, m und n jeweils 0, 1, 2 oder 3 bedeuten und m+n zusammen 1, 2 oder 3 sind.

8. Verfahren nach einem der Ansprüche 4 bis 7, weiterhin umfassend das Entfernen von Lösungsmittel und Wasser aus dem Produkt der Stufe (G) und Trocknen des erhaltenen Pulvers.

9. Verfahren nach einem der Ansprüche 4 bis 8, **dadurch gekennzeichnet, dass** die Dispersion von mit organischen Gruppen oberflächenmodifizierten Titandioxid-Partikeln mit einem Durchmesser von durchschnittlich ≤ 30 nm hergestellt wird unter Einsatz der nachfolgenden Schritte:
(A) Bereitstellen einer kolloiddispersen Lösung, die durch Hydrolyse komplexierter Titanhalogenide oder -alkoxide nach dem Sol-Gel Verfahren aus löslichen Vorstufen in einem organischen Lösungsmittel hergestellt wurde,
(B) Einengen der gemäß (A) gebildeten Lösung bei einer Temperatur im Bereich zwischen 50°C und 100°C zur Entfernung nicht umgesetzter Ausgangsmaterialien und leichtflüchtiger Produkte, und
entweder
(C-1) Aufnehmen des Produkts der Stufe (B) in einem organischen Lösungsmittel, wobei eine Lösung entsteht, und Autoklavieren dieser Lösung in einem abgeschlossenen Druckbehälter,
oder
(C-2) Aufnehmen des Produkts der Stufe (B) in Wasser, wobei eine Lösung entsteht, und Autoklavieren dieser Lösung in einem abgeschlossenen Druckbehälter, wobei eine wasserbasierte Dispersion oder gelartige Masse, die in ihrem Netzwerk eingebettete, in einem gewissen Ausmaß bereits oberflächenmodifizierte, kristalline Titandioxid-Nanopartikel enthält, und nachfolgendes Aufnehmen dieser Dispersion in einem Alkohol.

10. Verwendung der Partikel nach einem der Ansprüche 1 bis 3 als Füllstoff in einer organischen oder anorganisch-organischen Polymermatrix, die zur Herstellung eines Gegenstands oder einer Beschichtung verwendet wird, die als innere oder als äußerste Beschichtung eines Schichtsystems aufgebracht werden kann, oder die in Form des genannten Gegenstands oder aus der genannten Beschichtung entstandenen Schicht vorliegt.

11. Verwendung nach Anspruch 10, **dadurch gekennzeichnet, dass** die Partikel als Füllstoff von organischen oder anorganisch-organischen (Hybrid-)Matrices dienen, die für die Herstellung von Linsen oder anderen optischen Gegenständen oder von in der Photokatalyse einsetzbaren Gegenständen vorgesehen sind, oder als Füllstoff in aus den genannten Matrices hergestellten Linsen oder anderen optischen Gegenständen oder in der Photokatalyse einsetzbaren Gegenständen.

12. Verfahren zum Herstellen einer Dispersion von mit organischen Gruppen oberflächenbelegten Titandioxid-Partikeln mit einer Teilchengröße im Bereich von durchschnittlich ≤ 30 nm, gemessen mittels XRD/Scherrer-Methode, **gekennzeichnet durch** die folgenden Schritte:
(A) Bereitstellen einer kolloiddispersen Lösung, die durch Hydrolyse komplexierter Titanhalogenide oder -alkoxide nach dem Sol-Gel Verfahren aus löslichen Vorstufen in einem organischen Lösungsmittel hergestellt wurde,
(B) Einengen der gemäß (A) gebildeten Lösung bei einer Temperatur im Bereich zwischen 50°C und 100°C zur Entfernung nicht umgesetzter Ausgangsmaterialien und leichtflüchtiger Produkte,
(C) Aufnehmen des Produkts der Stufe (B) in einem organischen Lösungsmittel, wobei eine Lösung entsteht, und Autoklavieren dieser Lösung in einem abgeschlossenen Druckbehälter, wobei
das Aufnehmen des Produkts und das Autoklavieren vorzugsweise in einem organischen Lösungsmittel erfolgt, das nicht mehr als 10 Gew.-%, stärker bevorzugt nicht mehr als 5 Gew.-% und ganz besonders bevorzugt nicht mehr als 2,5 Gew.-% Wasser enthält, und/oder
das Autoklavieren vorzugsweise in Abwesenheit von zusätzlichem Wasser erfolgt.

13. Partikel nach Anspruch 1, in denen das Titandioxid in der Anatas- oder Rutilmodifikation vorliegt.

## Claims

1. Particles comprising a crystalline core of titanium dioxide having an average diameter, measured by the XRD/Scherrer method, of ≤ 30 nm, a shell of a metal oxide having no photocatalytic properties, and an outer skin carrying organic radicals, wherein the organic radicals of the outer skin are selected from straight-chain, branched or cyclic alkyl, alkenyl, alkynyl, aryl, arylalkyl, alkylaryl, arylalkenyl, alkenylaryl, arylalkynyl, which is attached via a carbon atom and which is substituted by one or more reactive radicals, in particular selected from those which are themselves or carry unsubstituted or substituted amino, amide, aldehyde, keto, alkylcarbonyl, carboxy, mercapto, cyano, hydroxy, alkoxy, alkoxycarbonyl, sulfonic acid, phosphoric acid, phosphoric acid, amino, amide, aldehyde, keto, alkylcarbonyl, carboxy, mercapto-, cyano, hydroxy, alkoxy, alkoxycarbonyl, sulfonic acid, phosphoric acid, acryloxy, methacryloxy, epoxy or urethane groups, or carry mixtures of such groups and whose carbon chain is continuous or can be interrupted by oxygen or sulphur atoms or by the group -NR", wherein R" is hydrogen or alkyl,
**characterised in that** the metal oxide shell without photocatalytic properties completely envelops the core, preferably with a thickness of up to 10 nm, more preferably with a thickness of up to 5 nm, or only partially surrounds the core.

2. The particles according to claim 1, wherein the metal oxide is SiO2.

3. The particles according to one of claims 1 or 2, **characterised in that** the outer skin is present in a monomolecular layer, preferably in the form of a metal oxide layer, the metal atoms of which are completely or partially substituted with at least one group as defined in claim 1.

4. A process for producing particles according to any one of claims 1 to 3, comprising the following steps:
(D) providing a dispersion of crystalline titanium dioxide particles surface-modified with organic groups and having an average diameter of ≤ 30 nm in a solution containing a dissolved, hydrolytically condensable compound of a metal M, the oxide of which is to form said shell, using an organic solvent or a mixture of an organic solvent and water as solvent, and adjusting the pH of the solution in such a way that complete deagglomeration of the nanoparticles takes place,
(E) agitating the dispersion in the presence of a quantity of water sufficient for the hydrolytic condensation of the dissolved hydrolytically condensable compound of the metal M until the organic constituents with which the modified TiO₂ particles were coated are displaced and an oxidic shell of the metal M is formed,
(F) preferably at least partial removal of the solvent/water from the product of step (E),
(G) adding an oxide shell surface modifying component to the product of step (F) and causing an outer skin having organic groups to be formed on the particles by means of said component, thereby obtaining a dispersion of surface modified particles.

5. The process according to claim 4, wherein the hydrolytically condensable compound of the metal M is selected from alkoxysilanes.

6. The process according to claim 4 or 5, wherein the component modifying the surface of the oxidic shell is selected from metal compounds carrying an organic radical bonded to metal atoms M of said compound via a carbon atom and a hydrolytically condensable radical, and wherein causing the formation of an outer skin having organic groups comprises dissolving said component in water or a solvent containing a sufficient amount of water for the hydrolytic condensation of said component and depositing the hydrolysed compound in the form of a condensate on the surface of particles.

7. The process according to claim 6, wherein the metal compounds which carry an organic radical bonded to metal atoms M via a carbon atom and a hydrolytically condensable radical are selected from silanes of the formula (I)
RₘR'ₙSiX₄₋ₘ₋ₙ (I)
wherein X is identical or different and is a radical, in particular an alkoxide, which can be hydrolysed in the presence of water and optionally a catalyst, R is identical or different and is unsubstituted or substituted, straight-chain, branched or cyclic alkyl, alkenyl, alkynyl, aryl, arylalkyl, alkylaryl, arylalkenyl, alkenylaryl, arylalkynyl, in which the carbon chain may be uninterrupted or interrupted by oxygen or sulphur atoms or by the group -NR", wherein R" is hydrogen or alkyl, R' is identical or different and is unsubstituted or substituted, straight-chain, branched or cyclic alkyl, alkenyl, alkynyl, aryl, arylalkyl, alkylaryl, arylalkenyl, alkenylaryl, arylalkynyl, which contains one or more, optionally identical or different substituents selected from substituents which themselves are or carry unsubstituted or substituted amino, amide, aldehyde, keto, alkylcarbonyl, carboxy, mercapto, cyano, hydroxy, alkoxy, alkoxycarbonyl, sulfonic acid, phosphoric acid, acryloxy, methacryloxy, epoxy or urethane groups, m and n are each 0, 1, 2 or 3 and m+n together are 1, 2 or 3.

8. The process according to any one of claims 4 to 7, further comprising removing solvent and water from the product of step (G) and drying the resulting powder.

9. The process according to any one of claims 4 to 8, **characterized in that** the dispersion of titanium dioxide particles surface-modified with organic groups and having an average diameter of ≤ 30 nm is prepared using the following steps:
(A) providing a colloidally dispersed solution prepared by hydrolysis of complexed titanium halides or titanium alkoxides by the sol-gel process from soluble precursors in an organic solvent,
(B) concentrating the solution formed according to (A) at a temperature in the range between 50°C and 100°C to remove unreacted starting materials and highly volatile products, and
either
(C-1) taking up the product of step (B) in an organic solvent to form a solution and autoclaving this solution in a sealed pressure vessel,
or
(C-2) taking up the product of step (B) in water to form a solution, and autoclaving this solution in a sealed pressure vessel, wherein a water-based dispersion or gel-like mass contains crystalline titanium dioxide nanoparticles embedded in its network and already surface-modified to a certain extent, and subsequently taking up this dispersion in an alcohol.

10. Use of the particles according to any one of claims 1 to 3 as a filler in an organic or inorganic-organic polymer matrix which is used to produce an article or a coating which can be applied as an inner or outermost coating of a layer system, or which is in the form of said article or which is formed from said coating.

11. The use according to claim 10, **characterized in that** the particles serve as filler of organic or inorganic-organic (hybrid)-matrices intended for the production of lenses or other optical articles or of articles which can be used in photocatalysis, or as filler in lenses or other optical articles produced from said matrices or articles which can be used in photocatalysis.

12. A process for preparing a dispersion of titanium dioxide particles surface-coated with organic groups and having an average particle size in the range of ≤ 30 nm, measured by the XRD/Scherrer method, **characterized by** the following steps:
(A) preparing of a colloidally dispersed solution prepared by hydrolysis of complexed titanium halides or titanium alkoxides from soluble precursors in an organic solvent according to the sol-gel process,
(B) concentrating the solution formed according to (A) at a temperature in the range between 50°C and 100°C to remove unreacted starting materials and highly volatile products,
(C) taking up the product of step (B) in an organic solvent, thereby forming a solution, and autoclaving this solution in a sealed pressure vessel, wherein
the taking up the product and the autoclaving is preferably carried out in an organic solvent containing not more than 10%, more preferably not more than 5% and most preferably not more than 2.5% by weight of water, and/or autoclaving is preferably carried out in the absence of additional water.

13. The particles according to claim 1, in which the titanium dioxide is present in the anatase or rutile modification.

## Revendications

1. Particules comportant un noyau cristallin en dioxyde de titane qui présentent un diamètre moyen, mesuré par la méthode de diffraction des rayons X de Scherrer, ≤ 30 nm, une couche d'un oxyde métallique, qui ne présente pas de propriétés photo-catalytiques, ainsi qu'une couche d'enrobage, qui porte des radicaux organiques, dans lesquelles les radicaux organiques de la couche d'enrobage sont choisis parmi un alkyle, un alcényle, un alcinyle, un aryle, un arylalkyle, un alkylaryle, un arylalcényle, un alcénylaryle, un arylalcinyle, lié par un atome de carbone, à chaîne droite, ramifié ou cyclique, qui est substitué avec un ou plusieurs radicaux réactifs, en particulier choisi(s) parmi ceux qui sont ou qui portent des groupes, de leur côté non substitués ou substitués, amino, amide, aldéhyde, cétone, alkylcarbonyle, carboxy, mercapto, cyano, hydroxy, alcoxy, alcoxycarbonyle, acide sulfonique, acide phosphorique, acryloxy, méthacryloxy, époxy ou uréthane ou qui portent des mélanges de ces groupes et dont la chaîne de carbone est continue ou peut être interrompue par des atomes d'oxygène ou de soufre ou par le groupe -NR" où R" est un atome d'hydrogène ou un groupe akyle,
**caractérisées en ce que** la couche d'oxyde métallique sans propriétés photo-catalytiques entoure entièrement le noyau, de préférence avec une épaisseur jusqu'à 10 nm, de préférence encore avec une épaisseur jusqu'à 5 nm, ou **en ce qu'**elle n'entoure que partiellement le noyau.

2. Particules selon la revendication 1, dans lesquelles l'oxyde métallique est le SiO₂.

3. Particules selon une des revendications 1 ou 2, **caractérisées en ce que** la couche d'enrobage se présente sous la forme d'une couche mono-moléculaire, de préférence sous la forme d'une couche d'oxyde métallique, dont les atomes métalliques sont entièrement ou partiellement substitués avec au moins un groupe tel que défini dans la revendication 1.

4. Procédé de fabrication de particules selon l'une quelconque des revendications 1 à 3, comprenant les étapes suivantes:
(D) préparer une dispersion de particules de dioxyde de titane cristallines, modifiées en surface avec des groupes organiques, qui présentent un diamètre qui est en moyenne ≤ 30 nm, dans une solution qui contient un composé d'un métal M dissous, condensable par hydrolyse, dont l'oxyde doit former la couche précitée, dans lequel on utilise comme solvant un solvant organique ou un mélange d'un solvant organique et d'eau, et régler une valeur du pH de la solution, de telle manière qu'il se produise une désagrégation totale des nanoparticules,
(E) agiter la dispersion en présence d'une quantité d'eau suffisante pour la condensation hydrolytique du composé du métal M dissous, condensable par hydrolyse, jusqu'à ce que les composants organiques, dont les particules de TiO₂ modifiées étaient chargées, soient déplacés et qu'une couche d'oxyde du métal M soit formée,
(F) éliminer de préférence au moins partiellement le solvant/l'eau du produit obtenu à l'étape (E), et
(G) ajouter un composant modifiant la surface de la couche d'oxyde au produit obtenu à l'étape (F) et provoquer la formation d'une couche d'enrobage, qui présente des groupes organiques, à l'aide de ce composant sur les particules,
dans lequel on obtient une dispersion de particules modifiées en surface.

5. Procédé selon la revendication 4, dans lequel le composé du métal M condensable par hydrolyse est choisi parmi des alcoxysilanes.

6. Procédé selon la revendication 4 ou 5, dans lequel le composant modifiant la surface de la couche d'oxyde est choisi parmi des composés métalliques, qui portent un radical organique lié par un atome de carbone à des atomes métalliques M de ce composé ainsi qu'un radical condensable par hydrolyse, et dans lequel l'étape provoquant la formation d'une couche d'enrobage, qui présente des groupes organiques, comprend la dissolution de ce composant dans l'eau ou dans un solvant, qui contient une quantité d'eau suffisante pour la condensation hydrolytique de ce composant, et la précipitation de ce composé hydrolysé sous la forme d'un condensat sur la surface des particules.

7. Procédé selon la revendication 6, dans lequel les composés métalliques, qui portent un radical organique lié par un atome de carbone à des atomes métalliques M ainsi qu'un radical condensable par hydrolyse, sont choisis parmi des silanes de la formule (I)
RₘR'ₙSiX₄₋ₘ₋ₙ (I),
dans laquelle X est identique ou différent et est un radical hydrolysable en présence d'eau et éventuellement d'un catalyseur, est en particulier un alcoxyde, R est identique ou différent et représente un alkyle, un alcényle, un alcinyle, un aryle, un arylalkyle, un alkylaryle, un arylalcényle, un alcénylaryle, un arylalcinyle non substitué ou substitué, à chaîne droite, ramifié ou cyclique, dans lequel la chaîne de carbone est interrompue ou peut être interrompue par des atomes d'oxygène ou de soufre ou par le groupe -NR" où R" est un hydrogène ou un alkyle, R' est identique ou différent et représente un alkyle, un alcényle, un alcinyle, un aryle, un arylalkyle, un alkylaryle, un arylalcényle, un alcénylaryle, un arylalcinyle, non substitué ou substitué, à chaîne droite, ramifié ou cyclique, qui porte un ou plusieurs substituant(s) éventuellement identique(s) ou différent(s), choisi(s) parmi des substituants qui sont ou portent des groupes, de leur côté non substitués ou substitués, amino, amide, aldéhyde, cétone, alkylcarbonyle, carboxy, mercapto, cyano, hydroxy, alcoxy, alcoxycarbonyle, acide sulfonique, acide phosphorique, acryloxy, méthacryloxy, époxy ou uréthane, m et n valent respectivement 0, 1, 2 ou 3 et m+n ensemble sont 1, 2 ou 3.

8. Procédé selon l'une quelconque des revendications 4 à 7, comprenant en outre l'élimination de solvant et d'eau du produit obtenu à l'étape (G) et le séchage de la poudre obtenue.

9. Procédé selon l'une quelconque des revendications 4 à 8, **caractérisé en ce que** l'on produit la dispersion de particules de dioxyde de titane modifiées en surface avec des groupes organiques qui présentent un diamètre ≤ 30 nm en moyenne en exécutant les étapes suivantes:
(A) préparer une solution colloïdale dispersée, qui a été produite par hydrolyse d'halogénures ou d'alcoxydes de titane complexés selon le procédé sol-gel à partir de précurseurs solubles dans un solvant organique;
(B) restreindre la solution formée selon (A) à une température comprise dans la plage entre 50°C et 100°C afin d'éliminer des matières premières non converties ainsi que des produits volatils légers, et soit
(C1) reprendre le produit obtenu à l'étape (B) dans un solvant organique, en formant ainsi une solution, et passer cette solution à l'autoclave dans un réservoir sous pression fermé, soit
(C2) reprendre le produit obtenu à l'étape (B) dans de l'eau, en formant ainsi une solution, et passer cette solution à l'autoclave dans un réservoir sous pression fermé, dans lequel il se forme ainsi une dispersion à base d'eau ou une masse de type gel, qui contient des nanoparticules de dioxyde de titane cristallines noyées dans son réseau, déjà dans une certaine mesure modifiées en surface, et reprendre ensuite cette dispersion dans un alcool.

10. Utilisation des particules selon l'une quelconque des revendications 1 à 3 comme matière de charge dans une matrice polymère inorganique/organique, que l'on utilise pour la fabrication d'un objet ou d'un revêtement, qui peut être déposé comme revêtement intérieur ou comme revêtement extérieur d'un système stratifié, ou qui se présente sous la forme dudit objet ou de la couche formée par ledit revêtement.

11. Utilisation selon la revendication 10, **caractérisée en ce que** les particules servent de matière de charge de matrices organiques ou de matrices (hybrides) inorganiques/organiques, qui sont prévues pour la fabrication de lentilles ou d'autres objets optiques ou d'objets utilisables dans la photo-catalyse, ou comme matière de charge dans des lentilles ou d'autres objets optiques fabriqués avec lesdites matrices ou d'objets utilisables dans la photo-catalyse.

12. Procédé de production d'une dispersion de particules de dioxyde de titane chargées en surface de groupes organiques qui présentent une taille de particules dans la plage ≤ 30 nm en moyenne, mesurée par la méthode de diffraction des rayons X de Scherrer, **caractérisé par** les étapes suivantes:
(A) préparer une solution colloïdale dispersée, qui a été produite par hydrolyse d'halogénures ou d'alcoxydes de titane complexés selon le procédé sol-gel à partir de précurseurs solubles dans un solvant organique,
(B) restreindre la solution formée selon (A) à une température comprise dans la plage entre 50°C et 100°C afin d'éliminer des matières premières non converties ainsi que des produits volatils légers,
(C) reprendre le produit obtenu à l'étape (B) dans un solvant organique, en formant ainsi une solution, et passer cette solution à l'autoclave dans un réservoir sous pression fermé, dans lequel
on effectue la reprise du produit et le passage à l'autoclave de préférence dans un solvant organique, qui ne contient pas plus de 10 % en poids, de préférence pas plus de 5 % en poids, et de préférence encore pas plus de 2,5 % en poids d'eau, et/ou
on effectue le passage à l'autoclave de préférence en l'absence d'eau additionnelle.

13. Particules selon la revendication 1, dans lesquelles le dioxyde de titane se présente sous la variante anatase ou rutile.
